# FASCICULE DE BREVET EUROPEEN

(11) **EP 2 058 195 B1**
(45) Date de publication et mention de la délivrance du brevet: **10.05.2017**
(21) Numéro de dépôt: 08019608.2
(22) Date de dépôt: 10.11.2008
(51) Int. Cl.: B60T 13/567

(54) **Servomoteur pneumatique d'assistance au freinage**
Pneumantischer Bremskraftverstärker
Pneumatic brake booster

(30) Priorité: 12.11.2007 FR 0707936
(43) Date de publication de la demande: 13.05.2009
(73) Titulaire: ROBERT BOSCH GMBH, 70442 Stuttgart (DE)
(72) Inventeur: Carles, Francisco, 95470 Saint Witz (FR); Simon Bacardit, Juan, 08013 Barcelona (ES); Berthomieu, Bruno, 08041 Barcelona (ES)

(56) Documents cités:
- EP-A- 0 331 535
- DE-A1- 3 302 762
- DE-A1- 19 805 845
- US-A1- 2007 089 601

## Description

La présente invention se rapporte principalement à un servomoteur pneumatique d'assistance au freinage, en particulier pour un véhicule.

Le brevet US 5,410,880 divulgue un système de commande de freins pour un véhicule à moteur. Un système 10 selon ce document, représenté schématiquement en figure 1, comprend un servomoteur pneumatique d'assistance au freinage 12 (qui est du type tandem dans cette réalisation) et un maître-cylindre 14.

Le servomoteur 12 et le maître-cylindre 14 sont alignés le long d'un axe A et sont conçus de telle façon à ce que le système 10 puisse être monté sur un mur de division 16 du véhicule.

Ce servomoteur 12 comprend un boîtier incluant une partie avant 20, une partie centrale 22 et une partie arrière 24.

Deux cloisons de séparation 32,34 mobiles sur lesquelles on peut générer une différence de pression grâce à une valve à trois voies 48 bien connu de l'homme du métier divisent l'intérieur du servomoteur 12 en 4 chambres 40, 42, 44 and 46. Les chambres 40 et 44 sont en communication constante et sont connectées de façon connue par l'homme du métier à une source de dépression. Les chambres 42 et 46 sont en communication au travers d'un soufflet 38 élastique de façon connue pour un servomoteur tandem.

La valve à trois voies 48 assure que les chambres 42 et 46 soient à la même dépression que les chambres 40 et 44 quand aucune action n'est exercée sur le servomoteur 12, et que de l'air rentre dans ces mêmes chambres 42 et 46 lorsque le servomoteur 12 est commandé de façon à créer une différence de pression sur les cloisons de séparation 32,34 mobiles.

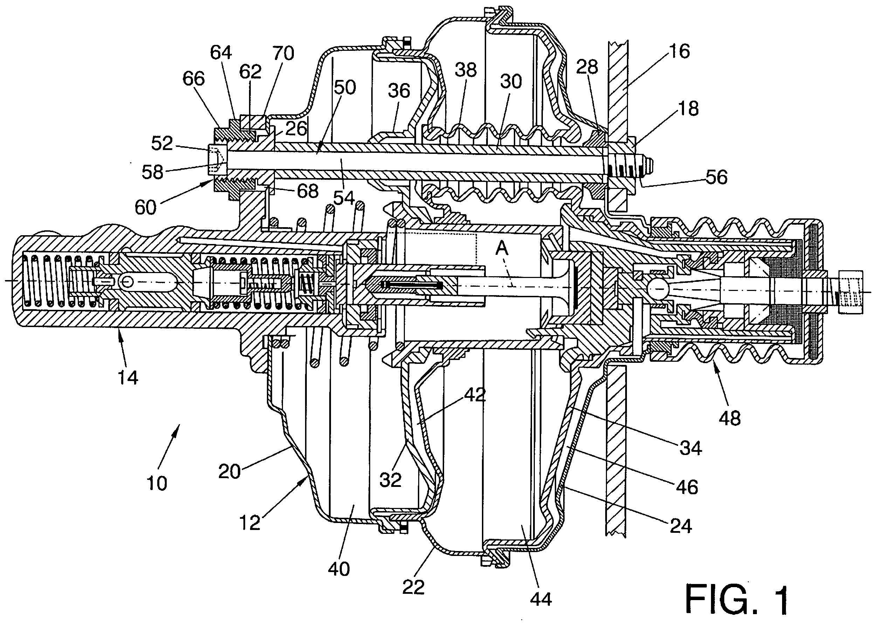

Le maître-cylindre 14 inclut deux brides 70 (une seule bride est visible dans la figure 1) qui sont attachée à la partie avant 20 du boîtier du servomoteur 12 quand le maître-cylindre 14 est associé au servomoteur 12. Chaque bride 70 a un trou passant 68.

Lorsque le maître-cylindre 14 est associé au servomoteur 12, deux boulons 50 qui comprennent chacun :
- un arbre 54,
- une tête 52 disposée devant la partie avant 20 du boîtier, et
- une partie filetée 56 sortant de la partie arrière 24 du boîtier et étant adaptée pour être vissée dans un filet fixe 18 présent dans le mur de division 16 d'un véhicule à moteur,
passent respectivement au travers :
- d'un membre intérieur évidé et fileté 26 qui a une face avant 58 où s'appuie la tête 52 du boulon 50 et qui est attaché à la partie avant 20 du boîtier,
- d'un tube 30 contigu au membre intérieurement évidé 26, tube qui s'étend au travers des 2 cloisons de séparation 32,34 mobiles et
- d'un membre arrière fileté 28 attaché à la partie arrière 24 du boîtier, le tube 30 étant vissé dans ce membre arrière fileté 28.

Chaque bride 70 est serrée entre le membre fileté intérieur 26 et un membre fileté extérieur et évidé 60, dont le diamètre intérieur est plus grand que le diamètre de la tête 52 du boulon associé à cette bride 70.

Pour cela, chaque membre fileté extérieur 60 inclut :
- une extension 62 semblable à un manchon qui s'engage dans le trou 68 de la bride pour être vissé sur le membre fileté intérieur 26,
- un épaulement 64 pour venir en butée contre la bride 70 correspondante et
- une extrémité hexagonale 66 conçue pour coopérer avec un outil pouvant s'y agripper afin de serrer par vissage le membre fileté extérieur 60.

Ce système divulgué dans le brevet US 5,410,880 présente des inconvénients. Notamment, le membre fileté intérieur 26 doit être attaché à la partie avant du boîtier car c'est justement cette fixation qui apporte son blocage en rotation. De plus, il est nécessaire de disposer d'un membre arrière 28 dans lequel est vissé le tube 30, ce qui pose un sérieux problème d'étanchéité au niveau du filetage, par où peut passer de l'air dans la chambre 46, mettant en péril le bon fonctionnement du servomoteur 12.

Un autre servomoteur, similaire à celui selon US 5,410,880, mais avec un tube fixé à la partie arrière du boîtier par sertissage est connu de EP0331535.

C'est par conséquent un des buts de la présente invention de fournir un servomoteur pouvant contenir au moins un boulon traversant et présentant une étanchéité arrière améliorée de façon simple et économique (un servomoteur étant un produit de grandes séries).

C'est aussi un autre but de l'invention de fournir un système de freinage comprenant un servomoteur conforme à l'invention et un maître-cylindre, système conçu de telle sorte qu'on puisse dissocier le maître-cylindre du servomoteur, par exemple en cas de panne du maître-cylindre, tout en pouvant maintenir le servomoteur fixé par exemple à un véhicule.

Ces buts sont notamment atteints par cette invention qui concerne un servomoteur pneumatique d'assistance au freinage d'axe X commandé par une tige de commande à l'arrière du servomoteur comme indiqués par les caractéristiques de la partie caractérisante de la revendication indépendante 1.

En général, l'arrière est la partie de toute pièce orienté vers la tige de commande (c'est-à-dire la pédale de frein) et l'avant est sa partie opposé.

Ainsi ce servomoteur peut coopérer avec un boulon qui comprend un arbre qui s'étend au travers des deux parties avant et arrière du boîtier et de la cloison de séparation mobile, cet arbre pouvant alors se terminer par une partie filetée sortant de la partie arrière du boîtier orienté vers la tige de commande de façon à pouvoir se visser dans un élément fixe d'un véhicule à moteur, par exemple dans un filet ou écrou fixe présent dans un mur de division d'un véhicule à moteur (dans le compartiment moteur du véhicule). Ce boulon peut être fourni soit avec le servomoteur, soit de façon séparée.

Le tube de l'invention traverse donc la cloison de séparation.

Dans une réalisation, le servomoteur comprend plusieurs tubes (par exemple deux disposés de façon symétrique par rapport à l'axe).

Cette invention est bien sûr applicable à des servomoteurs ayant plus d'une cloison de séparation, notamment les servomoteurs tandem.

Le tube peut avoir une fonction séparatrice des deux parties opposées du boîtier apportant ainsi une rigidité à l'ensemble.

Le boîtier peut comprendre deux coquilles, l'une étant la partie arrière et l'autre étant la partie avant de ce boîtier.

Dans une réalisation, la fixation étanche est obtenue par sertissage du tube sur la partie arrière du boîtier. Grâce au sertissage du tube dans la partie arrière du boîtier, il n'y a plus de problème d'étanchéité dans la liaison du tube au boîtier. Ce résultat (étanchéité) est de plus obtenu de façon économique (pas de pièces supplémentaires).

Selon une réalisation, le servomoteur comprend une rondelle placée à l'intérieur du boîtier entre une butée du tube et la partie arrière du boîtier.

Dans une réalisation, le tube est plié afin de présenter une surface de contact entre le tube et la partie arrière du boîtier à l'intérieur du boîtier. Grâce à cette réalisation, on évite la rondelle de la réalisation précédente, ce qui apporte une réduction du nombre de pièces nécessaires et donc un gain de coût.

Selon une réalisation, le servomoteur comprend deux tubes pour deux boulons, tubes symétriquement disposés autour de l'axe du servomoteur.

Avantageusement, quand un servomoteur coopère avec un boulon ayant une tête et se logeant dans le tube, le filetage externe de la douille peut être d'un diamètre supérieur à la tête du boulon pour recevoir en liaison vissée un écrou de fixation d'un maître-cylindre qui peut donc passer autour de la tête du boulon.

Dans une réalisation, le moletage comprend des rainures axiales.

Selon une réalisation, la douille comprenant un filetage interne sur au moins une partie de sa longueur axiale, la douille est fixée sur le tube par pression radiale du tube sur ce filetage interne.

Un autre aspect de l'invention concerne un système de freinage comprenant un maître-cylindre et un servomoteur. Selon ce deuxième aspect de l'invention, un tel système est caractérisé en ce que le servomoteur est selon l'une des réalisations précédentes.

Dans une réalisation, le système de freinage comprend un boulon qui comprend un arbre qui s'étend au travers de la partie avant et de la partie arrière du boîtier et de la cloison de séparation mobile du servomoteur, le maître-cylindre comprenant une extension trouée traversée par la partie du boulon dépassant de la partie avant du boîtier vers l'extérieur du boîtier. Bien entendu, le système de freinage peut comprendre plusieurs boulons, notamment un boulon pour chaque tube compris dans le servomoteur, le maître-cylindre ayant une extension radiale pour chaque boulon.

Selon une réalisation, l'extension trouée est traversée par une partie du tube dépassant de la partie avant du boîtier vers l'extérieur du boîtier.

Dans une réalisation, le boulon ayant une tête, le filetage externe ayant un diamètre supérieur au diamètre de la tête, l'extension trouée est serrée contre la partie avant du boîtier avec un écrou vissée sur la douille.

Dans une réalisation, le système de freinage comprend un boulon sans tête qui comprend une partie avant filetée à son extrémité avant dépassant de la partie avant du boîtier. Cette partie filetée peut permettre de recevoir en liaison vissée un écrou de fixation du maître-cylindre sur le servomoteur.

Avantageusement, ce boulon sans tête peut comprendre un évidemment axial dans son extrémité avant dépassant de la partie avant du boîtier. Cet évidement axial permet d'introduire un outil dans le boulon sans tête pour pouvoir le visser, par exemple dans un véhicule.

Selon une réalisation, l'extension trouée est serrée contre la partie avant du boîtier avec un écrou vissé sur la partie avant fileté du boulon.

Dans une réalisation, le système de freinage comprend un moyen de liaison pour fixer le maître-cylindre sur le tube. Ainsi, indépendamment de la présence ou non d'un boulon, le maître-cylindre est fixé au servomoteur, ce qui est avantageux pour le transport de l'ensemble servomoteur et maître-cylindre avant sa fixation dans le véhicule.

Selon une réalisation, le moyen de liaison est une épingle dont l'une des pattes repose sur l'extension trouée et l'autre patte traverse, perpendiculairement à l'axe du tube, l'extension trouée et le tube.

Dans une réalisation, le tube comportant une rainure circulaire sur sa partie dépassant vers l'extérieur de la partie avant du boîtier, le moyen de liaison est un anneau ouvert élastique radialement monté sur la rainure circulaire et comprimé de façon élastique dans la rainure circulaire par l'extension trouée montée autour de l'anneau ouvert.

Selon un autre aspect de l'invention, cette invention concerne aussi un procédé de fabrication d'un servomoteur selon indiquée par les caractéristiques de la partie caractérisante de la revendication indépendante 16.

[La présente invention sera mieux comprise ...] sur lesquelles l'avant et l'arrière correspondent respectivement à la gauche et à la droite des figures 1 à 4 :
- la figure 1 est une coupe schématique d'un servomoteur et d'un maître-cylindre conformes à l'art antérieur,
- la figure 2a est une coupe schématique d'un servomoteur et d'un maître-cylindre conformes à une première réalisation de l'invention,
- la figure 2b est une représentation schématique d'un détail de la figure 2a,
- les figures 2c et 2d montrent deux variantes possibles de cette première réalisation,
- la figure 3 est une coupe schématique d'un servomoteur et d'un maître-cylindre conformes à une autre réalisation de l'invention,
- la figure 4 est une coupe schématique d'un servomoteur et d'un maître-cylindre conformes à une autre réalisation de l'invention,

Les signes de référence des mêmes éléments sont uniformes sur les différentes figures illustrant cette invention.

Dans les réalisations ici décrites, un système de freinage comprend un servomoteur pneumatique et un maître-cylindre. Un tel système est utilisé dans les véhicules à moteurs.

Un tel système est commandé par une pédale de frein coopérant avec une tige de commande du servomoteur, l'effort exercé sur cette pédale en cas de freinage étant transmis au servomoteur pour amplifier cet effort.

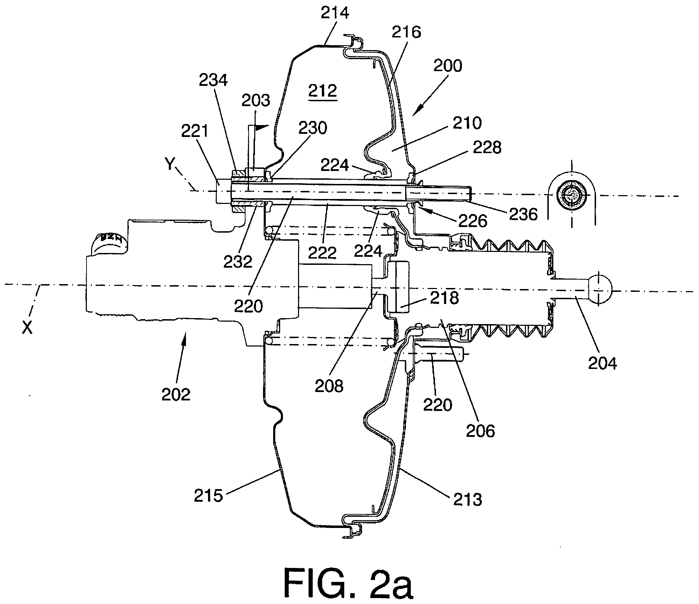

La figure 2a est une coupe schématique d'un tel système comprenant un servomoteur 200 d'axe X accouplé à un maître-cylindre 202 selon une réalisation de l'invention. Seuls sont représentés en détail les parties de ce système participant à l'invention.

Un servomoteur 200 comprend un boîtier 214 où coulisse une jupe 216 (cloison de séparation) montée sur un piston 206 du servomoteur. Le boîtier 214 comprend une partie avant 215 et une partie arrière 213. La jupe 216 divise l'intérieur du boîtier en deux chambres 210, 212: une chambre avant 212 qui est en dépression et une chambre arrière 210 qui peut être à la même dépression que la chambre avant 212 ou à une pression supérieure quand il y a freinage afin de créer une différence de pression entre les deux côtés de la jupe 216 et donc une force d'assistance. La pression dans la chambre arrière 210 est contrôlée par une valve à trois voies placée dans le piston 206 de façon connue par l'homme du métier.

Un tel système comprend en outre un maître-cylindre 202 qui reçoit une force assistée du servomoteur grâce à une tige de poussée 208 du servomoteur (la tige de poussée recevant la poussée du piston du servomoteur à travers un dispositif de réaction 218) pour la transmettre à un liquide de freinage.

La tige de commande 204 est reliée à une pédale de frein non représentée.

Cette tige de commande 204 coopère avec un piston 206 qui transmet à son tour, en cas d'effort appliqué sur la tige de commande 204, une poussée amplifiée (grâce à une tige de poussée 208) au maître-cylindre 202 à travers un dispositif de réaction 218 et une tige de poussée 208.

Cette poussée amplifiée est obtenue par un système de valve à trois voies bien connu de l'homme du métier qui fait augmenter la pression de la chambre arrière 210 par rapport à celle de la chambre avant 212.

Conformément à cette réalisation de l'invention, deux boulons 220 de fixation de l'ensemble servomoteur et maître-cylindre, traversent, à l'intérieur de tubes 222 respectifs (dont un seul est représenté dans la figure 2a) d'axe Y parallèle à l'axe X du servomoteur, le boîtier 214 et passent au travers de la jupe 216.

Des joints 224 assurent l'étanchéité du coulissement de la jupe sur chaque tube 222.

Chaque boulon 220 a une tête 221 qui est placée, quand le boulon 220 est monté dans le tube 222 traversant, à l'extérieur de la partie avant 215 du boîtier 214.

Chaque boulon 220 présente, à son extrémité opposée à sa tête 221, une zone filetée 236 s'étendant axialement. Cette zone filetée 236 est destinée à coopérer avec un écrou non représenté fixé à la caisse du véhicule où peut être fixé l'ensemble servomoteur 200 et maître-cylindre 202.

Lors de la fabrication du servomoteur 200, chaque tube 222 est serti à l'endroit 226 respectif de la partie arrière 213 du boîtier 214.

Ce sertissage fixe chaque tube 222 en translation et en rotation par rapport au boîtier 214. De plus, cette liaison par sertissage entre chaque tube 222 et la partie arrière du boîtier est étanche, ce qui est essentiel pour le bon fonctionnement du servomoteur 200 : en effet, l'extérieur du boîtier est en général à la pression atmosphérique, alors que l'intérieur de la chambre arrière 210 peut être en dépression par rapport à cette pression atmosphérique.

Afin de répartir la pression de chaque tube 222 sur l'endroit 226 respectif de la partie arrière du boîtier 214 où il est serti, une rondelle 228 est placée entre le tube 222 et la partie arrière 213 du boîtier 214 à l'intérieur de la chambre arrière 210 : ainsi la pression du tube 222 sur la partie arrière du boîtier 214 est répartie sur la surface de la rondelle 228.

Une autre rondelle 230 répartit aussi, à l'intérieur de la chambre avant 212, la pression de chaque tube 222 sur la partie avant 215 du boîtier 214 en s'appuyant à la fois sur une butée axiale du tube 222 et sur la face intérieure (c'est-à-dire orienté vers l'intérieur du boîtier 214) de la partie avant 215 du boîtier 214.

Chaque tube 222 traverse la partie avant 215 du boîtier 214 et dépasse vers l'extérieur du boîtier 214.

Dans cette réalisation, une douille 232 avec un moletage intérieur est placée autour de l'extrémité du tube 222 dépassant de la partie avant du boîtier 214.

Dans cette réalisation, ce moletage est droit, les stries du moletage étant parallèle à l'axe Y du tube 222.

Selon une variante, le moletage peut être croisé, les stries se croisant.

Dans cette réalisation, la douille ne comprend le moletage intérieur que sur une partie axiale, la partie axiale restante ayant un diamètre inférieur à celui de la partie moletée.

Lors de la fabrication de ce servomoteur 200, un poinçon est introduit dans chaque tube 222 de façon à le déformer radialement afin que chaque tube 222 vienne au contact de la douille 232 respective pour que chaque douille 232 soit fixée en rotation et axialement par rapport à son tube 222.

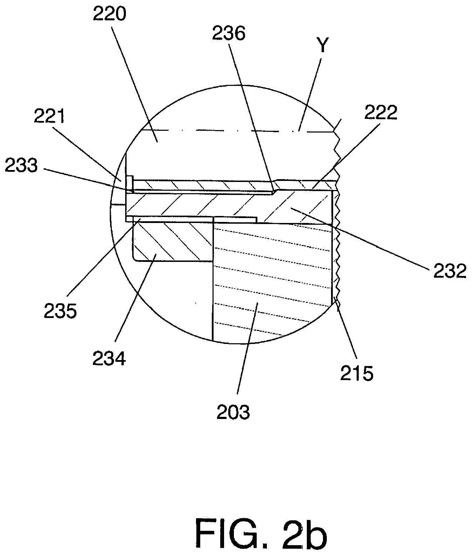

La figure 2b, détail de la figure 2a, montre schématiquement que, comme la douille 232 ne comprend le moletage 233 intérieur que sur une partie axiale, quand le tube 222 est déformé afin de venir au contact du moletage 233, il se crée une butée axiale 236 qui participe à la fixation axiale de la douille 232 par rapport au tube 222.

Cette douille 232 présente extérieurement un filetage 235 d'un diamètre supérieur à la tête 221 du boulon 220. C'est-à-dire que le diamètre extérieur de la douille 232 est plus grand que la tête 221 du boulon 220.

Quand on veut monter le servomoteur 200 dans une voiture, on place d'abord ce servomoteur 200 de telle façon que chaque endroit 226 soit en face de l'écrou respectif de la caisse de la voiture non représenté destiné à recevoir la partie filetée 236 du boulon 220 respectif.

Ensuite, on enfile un boulon 220 dans chaque tube traversant 222 et on visse chaque boulon 220 dans son écrou de la caisse jusqu'à ce que la tête 221 du boulon 220 vienne en butée contre la douille 232. Le servomoteur 200 est alors fixé à la caisse.

Ensuite, pour fixer le maître-cylindre 202 au servomoteur 200, on fait passer autour de la tête 221 de chaque boulon 220 une extension trouée 203 (dont le trou à un diamètre pratiquement égal à celui externe de la douille 232, au jeu de fixation près) qui vient buter contre la partie avant 215 du boîtier 214. Ensuite, on fait passer autour de chaque tête 221 du boulon 220 un écrou 234 : ainsi, chaque écrou 234 vient coopérer avec le filetage extérieur de chaque douille 232 et fixe l'extension trouée 203 respective du maître-cylindre (extension troué 203 au travers de laquelle passe dans cette réalisation un tube 222, un boulon 220 et une douille 232) en la serrant contre la partie avant 215 du boîtier 214.

S'il est nécessaire de démonter le maître-cylindre 202 tout en maintenant le servomoteur fixé (c'est-à-dire découpler le maître-cylindre 202 par rapport au servomoteur 200), il est alors possible simplement de desserrer chaque écrou 234 et de le retirer, ce qui libère très simplement le maître-cylindre, tout en maintenant le servomoteur 200 attaché à la caisse du véhicule. On peut alors réaliser des opérations de maintenance sur le maître-cylindre sans avoir à démonter le servomoteur du véhicule.

Si l'on souhaite démonter le servomoteur 200 du véhicule où il est monté, il suffit de dévisser chaque boulon 220, ce qui d'ailleurs peut se faire sans démonter le maître-cylindre 202 du servomoteur 200.

Cette réalisation peut avoir de multiples variantes.

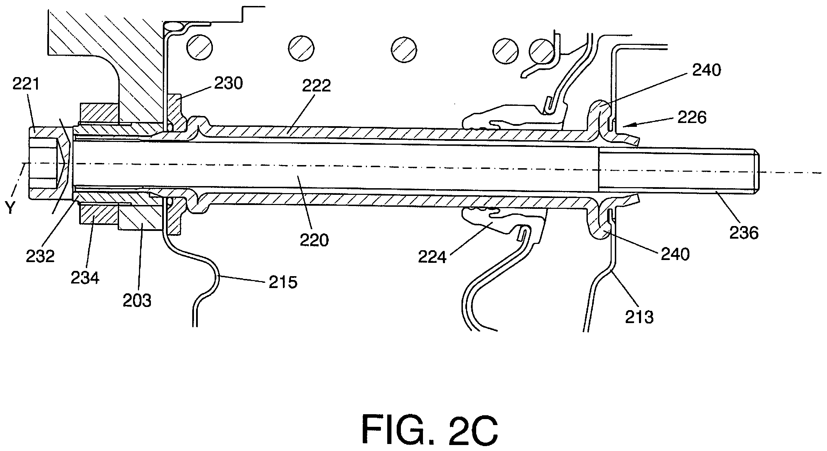

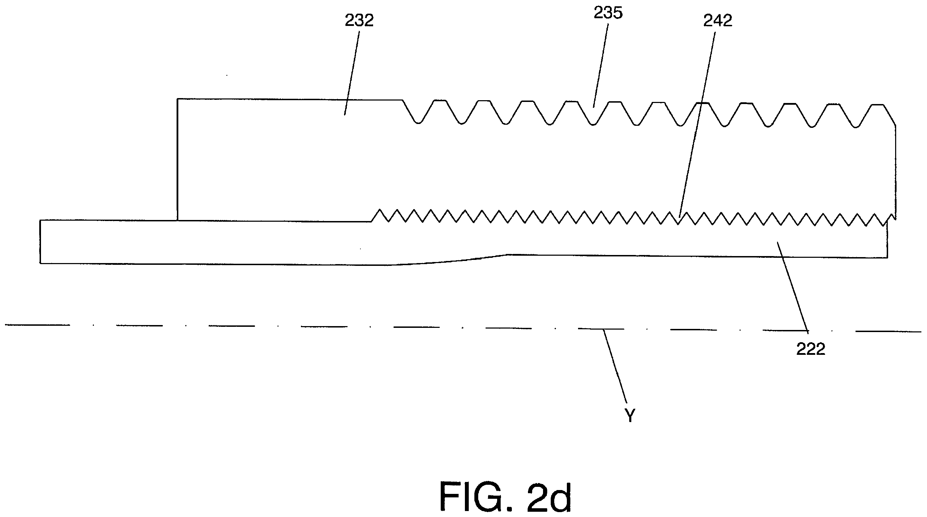

Les figures 2c et 2d montrent deux variantes possibles de cette première réalisation.

La première variante (figure 2c) concerne l'usinage de chaque tube 222 afin de former un pliage 240 qui évite la rondelle 228 décrite précédemment. Ce pliage 240 forme une extension radiale du tube 222, extension qui s'appuie sur l'intérieur de la partie arrière 213 du boîtier 214 à l'endroit 226. Cette variante permet de diminuer le coût final du servomoteur.

La deuxième variante (figure 2d) concerne le moyen de fixation entre une douille 232 et un tube traversant 222. Selon cette variante, la douille 232 comprend en son intérieur un filetage interne 242 au lieu du moletage 233 décrit précédemment. Cette douille 232 comprend toujours comme précédemment un filetage 235 extérieur pour coopérer avec l'écrou 234.

Le tube traversant 222 peut être dans cette variante composé d'un matériel qui est moins dur que dans la réalisation décrite précédemment.

Quand on introduit un poinçon dans le tube traversant 222 pour le déformer, ce tube traversant 222 vient alors au contact du filetage interne 242 et se déforme en s'incrustant dans ce filetage interne 242 (en fait il se crée alors un filetage externe sur le tube traversant 222). Des essais ont montré que ce moyen de fixation entre la douille 232 et le tube 222 est plus résistant que le moyen de liaison décrit précédemment tant en effort axial qu'en rotation.

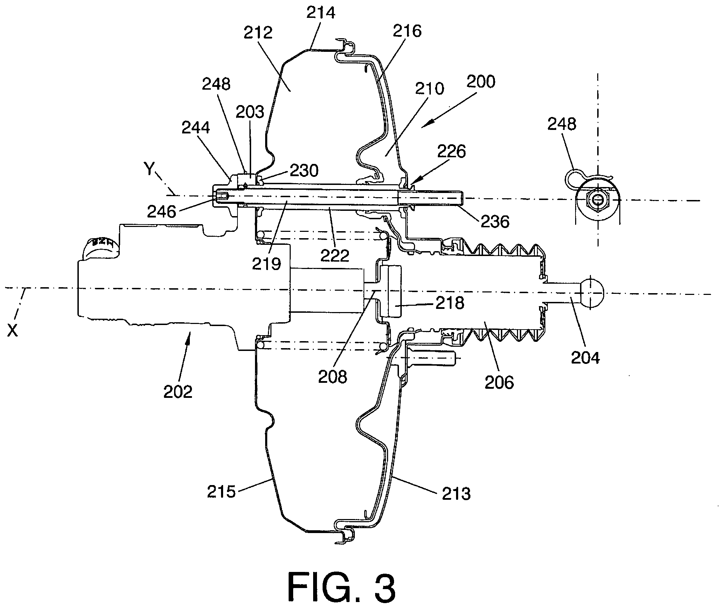

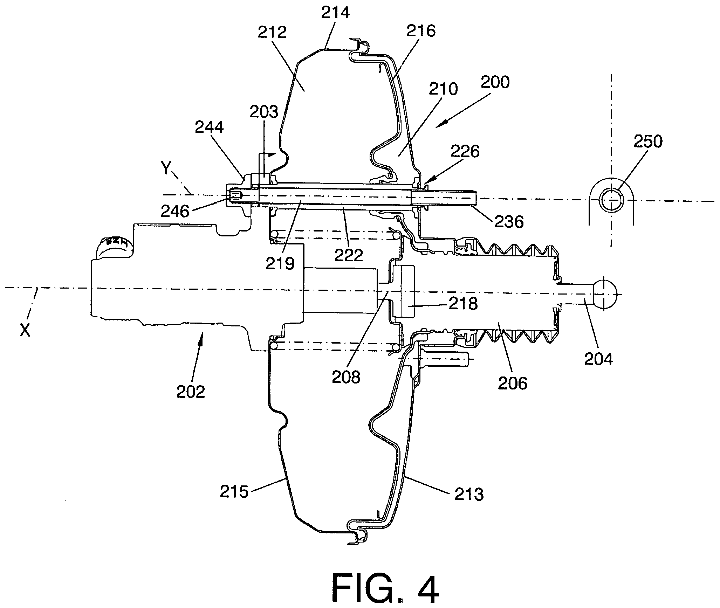

Les figures 3 et 4 représentent deux autres réalisations d'un système de freinage conforme à l'invention (dénommées troisième et quatrième réalisation respectivement) comprenant un servomoteur 200 et un maître-cylindre 202.

Dans ces troisième et quatrième réalisations, deux tubes 222 sont sertis à la partie arrière 213 du boîtier 214 à deux endroit 226 respectifs, ce qui immobilise chaque tube 222 par rapport au boîtier 214 et assure l'étanchéité de la chambre arrière 210. D'autres variantes peuvent contenir qu'un seul tube 222 ou plus de deux.

Les autres parties communes avec les réalisations décrites précédemment ne sont pas décrites à nouveau.

Ces réalisations diffèrent de celles précédemment décrites notamment en ce que :
- chaque boulon 219 n'a pas de tête contrairement au boulon 220 des figures 2a, 2b, 2c et 2d qui comprend une tête 221,
- chaque boulon 219 comprend un évidement axial 246 à son extrémité avant qui permet de visser ce boulon 219 dans un écrou fixe du compartiment moteur non représenté en y insérant un outil adapté,
- chaque boulon 219 est aussi fileté à son extrémité avant (c'est-à-dire son extrémité placé du côté du maître-cylindre quand il est monté dans le tube 222), ce filetage permettant de visser un écrou 244 de fixation du maître-cylindre 202 sur cette extrémité avant du boulon 219 afin de serrer une extension trouée 203 de ce maître-cylindre 202.

Ainsi, le ou les boulon(s) 219 de fixation est ou sont en deux parties démontables (boulon 219 sans tête et écrou 244) et est ou sont monté (s) dans un ou plusieurs tubes 222 séparateur(s) respectivement.

De plus, le système peut comprendre un moyen de liaison (référencé 248 dans la figure 3 ou référencé 250 dans la figure 4) qui permet notamment de faciliter le transport de l'ensemble servomoteur 200 et maître-cylindre 202 avant qu'il ne soit monté sur un véhicule (il peut donc ne pas y avoir de boulon 219 lors de ce transport).

Dans la réalisation de la figure 3, le moyen de liaison est une épingle 248.

L'une des pattes de l'épingle 248 repose à l'extérieur de l'extension trouée 203 et l'autre patte de l'épingle 248 traverse, perpendiculairement à l'axe Y du tube 222, l'extension trouée 203 et le tube 222.

Dans une autre réalisation (figure 4), le moyen de liaison est un anneau ouvert 250.Dans cette réalisation, au moins un tube comporte une rainure circulaire sur sa partie dépassant vers l'extérieur de la partie avant du boîtier. Le moyen de liaison est un anneau ouvert 250 élastique radialement monté sur la rainure circulaire et comprimé de façon élastique dans la rainure circulaire par l'extension trouée 203 du maître-cylindre montée autour de l'anneau ouvert 250. L'anneau exerce donc une pression radiale sur l'extension trouée du maître-cylindre qui est suffisante pour maintenir le maître-cylindre attaché au servomoteur lors du transport conjoint de ces deux éléments.

Toutes les réalisations décrites précédemment permettent la fixation au véhicule d'un ensemble servomoteur 200 et maître-cylindre 202 de forme directe (rigidité augmentée).

De plus, dans toutes les réalisations décrites précédemment, le montage d'un tel ensemble peut se faire par le compartiment moteur du véhicule, et il est possible de démonter le maître-cylindre sans démonter le servomoteur du compartiment moteur.

La présente invention s'applique principalement à l'industrie du freinage pour véhicule automobile.

## Revendications

1. Servomoteur (200) pneumatique d'assistance au freinage d'axe (X) commandé par une tige de commande (204) à l'arrière du servomoteur qui comprend:
a. un boîtier (214) ayant, suivant l'axe (X), une partie arrière (213) du côté de la tige de commande (204) et une partie avant (215) opposée,
b. une cloison de séparation (216) mobile le long de l'axe (X) du servomoteur (200) et divisant l'intérieur du boîtier (214) et
c. un dispositif pour générer une différence de pression autour de cette cloison de séparation (216), ce dispositif étant commandé par la tige de commande (204),
d. un tube (222) parallèle à l'axe (X) pour loger à l'intérieur du boîtier (214) l'arbre (219, 220) d'un boulon pouvant traverser la partie avant du boîtier (214), la cloison de séparation (216) mobile et la partie arrière du boîtier (214),
e. ce tube (222) étant fixé en translation et en rotation à la partie arrière (213) du boîtier de façon étanche et la fixation étanche étant obtenu par sertissage du tube (222) sur la partie arrière du boîtier (213),
**caractérisé en ce qu'**une douille (232) est fixée en translation et en rotation sur la partie avant du tube dépassant vers l'extérieur de la partie avant (213) du boîtier (214), cette douille (232) comprenant un filetage (235) externe et un moletage (233) interne ou un filetage (242) interne sur au moins une partie de sa longueur axiale, la douille est étant fixée sur le tube (222) par pression radiale du tube (222) sur ce moletage (233) ou sur ce filetage (242) interne.

2. Servomoteur selon la revendication 1, **caractérisé en ce qu'**il comprend une rondelle (228) placée à l'intérieur du boîtier (214) entre une butée du tube (219,222) et la partie arrière (213) du boîtier (214).

3. Servomoteur selon la revendication 1, **caractérisé en ce que** le tube (222) est plié (240) afin de présenter une surface de contact entre le tube (222) et la partie arrière du boîtier (214) à l'intérieur du boîtier (214).

4. Servomoteur selon l'une des revendications précédentes **caractérisé en ce qu'**il comprend deux tubes (222) pour deux boulons (219, 220), tubes symétriquement disposés autour de l'axe (X) du servomoteur (200).

5. Servomoteur selon la revendication 7, **caractérisé en ce que** le moletage comprend des rainures axiales.

6. Servomoteur selon la revendication 1, **caractérisé en ce que**, la douille (232) comprenant un filetage (242) interne sur au moins une partie de sa longueur axiale, la douille est fixée sur le tube (222) par pression radiale du tube (222) sur ce filetage (242) interne.

7. Système de freinage comprenant un maître-cylindre (202) et un servomoteur (200), **caractérisé en ce que** le servomoteur (200) est selon l'une des revendications précédentes.

8. Système de freinage selon la revendication 7, **caractérisé en ce qu'**il comprend un boulon (219, 220) qui comprend un arbre qui s'étend au travers de la partie avant (215) et de la partie arrière (213) du boîtier (214) et de la cloison de séparation (216) mobile du servomoteur (200), le maître-cylindre (202) comprenant une extension trouée (203) traversée par la partie du boulon (219, 220) dépassant de la partie avant du boîtier (214) vers l'extérieur du boîtier (214).

9. Système de freinage selon la revendication 8, **caractérisé en ce que**, l'extension trouée (203) est traversée par une partie du tube (222) dépassant de la partie avant (215) du boîtier (214) vers l'extérieur du boîtier (214).

10. Système de freinage selon la revendication 9 et l'une des revendications 3 à 6, **caractérisé en ce que**, le boulon (220) ayant une tête (221), le filetage (235) externe de la douille (232) ayant un diamètre supérieur au diamètre de la tête (221), l'extension trouée (203) est serrée contre la partie avant (215) du boîtier (214) avec un écrou (234) vissé sur la douille (232).

11. Système de freinage selon la revendication 8 ou 9 et une des revendications 1 à 2, **caractérisé en ce qu'**il comprend un boulon (219) sans tête qui comprend une partie avant filetée à son extrémité avant dépassant de la partie avant (215) du boîtier (214).

12. Système de freinage selon la revendication 11, **caractérisé en ce que** l'extension trouée (203) est serrée contre la partie avant (215) du boîtier (214) avec un écrou (244) vissé sur la partie avant filetée du boulon (219).

13. Système de freinage selon la revendication 11 ou 12, **caractérisé en ce qu'**il comprend un moyen de liaison (248, 250) pour fixer le maître-cylindre (202) sur le tube (222).

14. Système de freinage selon la revendication 13, **caractérisé en ce que** le moyen de liaison (248) est une épingle (248) dont l'une des pattes repose sur l'extension trouée (203) et l'autre patte traverse, perpendiculairement à l'axe (Y) du tube (222), l'extension trouée (203) et le tube (222).

15. Système de freinage selon la revendication 13, **caractérisé en ce que**, le tube (222) comportant une rainure circulaire sur sa partie dépassant vers l'extérieur de la partie avant (215) du boîtier (214), le moyen de liaison (250) est un anneau ouvert (250) élastique radialement monté sur la rainure circulaire et comprimé de façon élastique dans la rainure circulaire par l'extension trouée (203) montée autour de l'anneau ouvert (250).

16. Procédé de fabrication d'un servomoteur (200) selon l'une des revendications 1 à 6, **caractérisé en ce qu'**il comprend les étapes suivantes :
a. Monter le tube (222) traversant dans la partie arrière (213) du boîtier (214) par sertissage,
b. Monter la partie interne du servomoteur,
d. Fermer le servomoteur avec la partie avant (215) du boîtier (214) du servomoteur (200),
d. Disposer sur la partie avant du tube (222) dépassant vers l'extérieur de la partie avant (215) du boîtier (214), une douille (232) comprenant un moletage (233) interne ou un filetage interne (242) pour la fixer au tube (222),
e. Introduire un poinçon dans le tube (222) pour le déformer radialement et le fixer au moletage ou au filetage interne (233) de la douille (232).

## Patentansprüche

1. Pneumatischer Bremshilfe-Servomotor (200) mit einer Achse (X), der von einer Betätigungsstange (204) an der Rückseite des Servomotors gesteuert wird, der enthält:
a. ein Gehäuse (214), das gemäß der Achse (X) einen hinteren Teil (213) auf der Seite der Betätigungsstange (204) und einen gegenüberliegenden vorderen Teil (215) hat,
b. eine Trennwand (216), die entlang der Achse (X) des Servomotors (200) beweglich ist und das Innere des Gehäuses (214) teilt, und
c. eine Vorrichtung, um einen Druckunterschied um diese Trennwand (216) herum zu erzeugen, wobei diese Vorrichtung von der Betätigungsstange (204) gesteuert wird,
d. ein Rohr (222) parallel zur Achse (X), um im Inneren des Gehäuses (214) die Welle (219, 220) eines Bolzens unterzubringen, die den vorderen Teil des Gehäuses (214), die bewegliche Trennwand (216) und den hinteren Teil des Gehäuses (214) durchqueren kann,
e. wobei dieses Rohr (222) in Translation und in Rotation am hinteren Teil (213) des Gehäuses dicht befestigt ist, und die dichte Befestigung durch Quetschen des Rohrs (222) auf den hinteren Teil des Gehäuses (213) erhalten wird,
**dadurch gekennzeichnet, dass** eine Hülse (232) in Translation und Rotation am vorderen Teil des Rohrs befestigt ist, der nach außerhalb des vorderen Teils (213) des Gehäuses (214) vorsteht, wobei die Hülse (232) ein Außengewinde (235) und eine innere Rändelung (233) oder ein Innengewinde (242) über mindestens einen Teil ihrer axialen Länge enthält, wobei die Hülse am Rohr (222) durch radialen Druck des Rohrs (222) auf diese Rändelung (233) oder auf dieses Innengewinde (242) befestigt wird.

2. Servomotor nach Anspruch 1, **dadurch gekennzeichnet, dass** er eine Scheibe (228) enthält, die im Inneren des Gehäuses (214) zwischen einem Anschlag des Rohrs (219, 222) und dem hinteren Teil (213) des Gehäuses (214) angeordnet ist.

3. Servomotor nach Anspruch 1, **dadurch gekennzeichnet, dass** das Rohr (222) gefaltet ist (240), um eine Kontaktfläche zwischen dem Rohr (222) und dem hinteren Teil des Gehäuses (214) im Inneren des Gehäuses (214) aufzuweisen.

4. Servomotor nach einem der vorhergehenden Ansprüche, **dadurch gekennzeichnet, dass** er zwei Rohre (222) für zwei Bolzen (219, 220) enthält, wobei die Rohrs symmetrisch um die Achse (X) des Servomotors (200) angeordnet sind.

5. Servomotor nach Anspruch 7, **dadurch gekennzeichnet, dass** die Rändelung axiale Nuten enthält.

6. Servomotor nach Anspruch 1, **dadurch gekennzeichnet, dass**, da die Hülse (232) ein Innengewinde (242) über mindestens einen Teil ihrer axialen Länge enthält, die Hülse am Rohr (222) durch radialen Druck des Rohrs (222) auf dieses Innengewinde (242) befestigt ist.

7. Bremssystem, das einen Hauptzylinder (202) und einen Servomotor (200) enthält, **dadurch gekennzeichnet, dass** der Servomotor (200) nach einem der vorhergehenden Ansprüche ist.

8. Bremssystem nach Anspruch 7, **dadurch gekennzeichnet, dass** es einen Bolzen (219, 220) enthält, der eine Welle enthält, die sich durch den vorderen Teil (215) und den hinteren Teil (213) des Gehäuses (214) und die bewegliche Trennwand (216) des Servomotors (200) erstreckt, wobei der Hauptzylinder (202) eine gelochte Erweiterung (203) enthält, die von dem Teil des Bolzens (219, 220) durchquert wird, der über den vorderen Teil des Gehäuses (214) zur Außenseite des Gehäuses (214) vorsteht.

9. Bremssystem nach Anspruch 8, **dadurch gekennzeichnet, dass** die gelochte Erweiterung (203) von einem Teil des Rohrs (222) durchquert wird, der über den vorderen Teil (215) des Gehäuses (214) nach außerhalb des Gehäuses (214) vorsteht.

10. Bremssystem nach Anspruch 9 und einem der Ansprüche 3 bis 6, **dadurch gekennzeichnet, dass**, da der Bolzen (220) einen Kopf (221) hat, wobei das Außengewinde (235) der Hülse (232) einen größeren Durchmesser als der Durchmesser des Kopfes (221) hat, die gelochte Erweiterung (203) mit einer Mutter (234) gegen den vorderen Teil (215) des Gehäuses (214) gepresst wird, die auf die Hülse (232) geschraubt wird.

11. Bremssystem nach Anspruch 8 oder 9 und einem der Ansprüche 1 bis 2, **dadurch gekennzeichnet, dass** es einen kopflosen Bolzen (219) enthält, der einen vorderen Teil enthält, der an seinem vorderen Ende ein Gewinde hat, das über den vorderen Teil (215) des Gehäuses (214) vorsteht.

12. Bremssystem nach Anspruch 11, **dadurch gekennzeichnet, dass** die gelochte Erweiterung (203) mit einer Mutter (244) gegen den vorderen Teil (215) des Gehäuses (214) gepresst wird, die auf den vorderen Gewindeteil des Bolzens (219) geschraubt wird.

13. Bremssystem nach Anspruch 11 oder 12, **dadurch gekennzeichnet, dass** es eine Verbindungseinrichtung (248, 250) enthält, um den Hauptzylinder (202) am Rohr (222) zu befestigen.

14. Bremssystem nach Anspruch 13, **dadurch gekennzeichnet, dass** die Verbindungseinrichtung (248) eine Nadel (248) ist, von der einer der Schenkel auf der gelochten Erweiterung (203) ruht und der andere Schenkel lotrecht zur Achse (Y) des Rohrs (222) die gelochte Erweiterung (203) und das Rohr (222) durchquert.

15. Bremssystem nach Anspruch 13, **dadurch gekennzeichnet, dass**, da das Rohr (222) eine Ringnut auf seinem Teil aufweist, der vom vorderen Teil (215) des Gehäuses (214) nach außen vorsteht, die Verbindungseinrichtung (250) ein radial elastischer offener Ring (250) ist, der auf die Ringnut montiert ist und elastisch in der Ringnut durch die gelochte Erweiterung (203) komprimiert wird, die um den offenen Ring (250) herum montiert ist.

16. Verfahren zur Herstellung eines Servomotors (200) nach einem der Ansprüche 1 à 6, **dadurch gekennzeichnet, dass** es die folgenden Schritte enthält:
a. Montieren des durchquerenden Rohrs (222) im hinteren Teil (213) des Gehäuses (214) durch Aufquetschen,
b. Montieren des inneren Teils des Servomotors,
d. Schließen des Servomotors mit dem vorderen Teil (215) des Gehäuses (214) des Servomotors (200),
d. Anordnen einer Hülse (232) auf dem vorderen Teil des Rohrs (222), der nach außerhalb des vorderen Teils (215) des Gehäuses (214) vorsteht, die eine innere Rändelung (233) oder ein Innengewinde (242) enthält, um sie am Rohr (222) zu befestigen,
e. Einführen eines Stempels in das Rohr (222), um es radial zu verformen und an der Rändelung oder am Innengewinde (233) der Hülse (232) zu befestigen.

## Claims

1. Pneumatic brake booster (200), of axis (X), controlled by a control rod (204) at the rear of the booster, which comprises:
a. a casing (214) having, along the axis (X), a rear part (213) on the control rod (204) side and an opposite front part (215),
b. a separating partition (216) which is movable along the axis (X) of the booster (200) and divides the interior of the casing (214) and
c. a device for generating a pressure difference around this separating partition (216), this device being controlled by the control rod (204),
d. a tube (222) parallel to the axis (X) for accommodating within the casing (214) the shaft (219, 220) of a bolt which can traverse the front part of the casing (214), the movable separating partition (216) and the rear part of the casing (214),
e. this tube (222) being fixed in translation and in rotation to the rear part (213) of the casing in a sealed manner and the sealed fixing being obtained by crimping the tube (222) onto the rear part of the casing (213),
**characterized in that** a sleeve (232) is fixed in translation and in rotation to the front part of the tube projecting outwardly from the front part (213) of the casing (214), this sleeve (232) comprising an external thread (235) and an internal knurl (233) or an internal thread (242) over at least part of its axial length, the sleeve being fixed to the tube (222) by the tube (222) pressing radially onto this knurl (233) or onto this internal thread (242).

2. Booster according to Claim 1, **characterized in that** it comprises a washer (228) placed inside the casing (214) between an abutment of the tube (219, 222) and the rear part (213) of the casing (214).

3. Booster according to Claim 1, **characterized in that** the tube (222) is folded (240) so as to present a contact surface between the tube (222) and the rear part of the casing (214) within the casing (214).

4. Booster according to one of the preceding claims, **characterized in that** it comprises two tubes (222) for two bolts (219, 220), which tubes are symmetrically arranged about the axis (X) of the booster (200).

5. Booster according to Claim 7, **characterized in that** the knurl comprises axial grooves.

6. Booster according to Claim 1, **characterized in that**, with the sleeve (232) comprising an internal thread (242) over at least part of its axial length, the sleeve is fixed to the tube (222) by the tube (222) pressing radially onto this internal thread (242).

7. Braking system comprising a master cylinder (202) and a booster (200), **characterized in that** the booster (200) is in accordance with one of the preceding claims.

8. Braking system according to Claim 7, **characterized in that** it comprises a bolt (219, 220) which comprises a shaft which extends through the front part (215) and through the rear part (213) of the casing (214) and through the movable separating partition (216) of the booster (200), the master cylinder (202) comprising a holed extension (203) traversed by the part of the bolt (219, 220) projecting from the front part of the casing (214) towards the outside of the casing (214).

9. Braking system according to Claim 8, **characterized in that** the holed extension (203) is traversed by a part of the tube (222) projecting from the front part (215) of the casing (214) towards the outside of the casing (214).

10. Braking system according to Claim 9 and one of Claims 3 to 6, **characterized in that**, with the bolt (220) having a head (221) and with the external thread (235) of the sleeve (232) having a diameter greater than the diameter of the head (221), the holed extension (203) is clamped against the front part (215) of the casing (214) with a nut (234) screwed onto the sleeve (232).

11. Braking system according to Claim 8 or 9 and either of Claims 1 and 2, **characterized in that** it comprises a headless bolt (219) which comprises a threaded front part at its front end projecting from the front part (215) of the casing (214).

12. Braking system according to Claim 11, **characterized in that** the holed extension (203) is clamped against the front part (215) of the casing (214) with a nut (244) screwed onto the threaded front part of the bolt (219).

13. Braking system according to Claim 11 or 12, **characterized in that** it comprises a connection means (248, 250) for fixing the master cylinder (202) to the tube (222).

14. Braking system according to Claim 13, **characterized in that** the connection means (248) is a hairpin (248) of which one of the legs rests on the holed extension (203) and the other leg traverses, perpendicularly to the axis (Y) of the tube (222), the holed extension (203) and the tube (222).

15. Braking system according to Claim 13, **characterized in that**, with the tube (222) comprising a circular groove on its part projecting outwardly from the front part (215) of the casing (214), the connection means (250) is an elastic open ring (250) radially mounted on the circular groove and compressed elastically in the circular groove by the holed extension (203) mounted around the open ring (250).

16. Method for manufacturing a booster (200) according to one of Claims 1 to 6, **characterized in that** it comprises the following steps:
a. mounting the traversing tube (222) in the rear part (213) of the casing (214) by crimping,
b. mounting the inner part of the booster,
d. closing the booster with the front part (215) of the casing (214) of the booster (200),
d. arranging, on the front part of the tube (222) projecting outwardly from the front part (215) of the casing (214), a sleeve (232) comprising an internal knurl (233) or an internal thread (242) for fixing it to the tube (222),
e. introducing a punch into the tube (222) to deform it radially and fix it to the knurl or to the internal thread (233) of the sleeve (232).
